# EUROPÄISCHE PATENTSCHRIFT

(11) **EP 1 262 750 B1**
(45) Veröffentlichungstag und Bekanntmachung des Hinweises auf die Patenterteilung: **08.08.2007**
(21) Anmeldenummer: 02011261.1
(22) Anmeldetag: 22.05.2002
(51) Int. Cl.: G01J 3/10, G01J 3/50, G01N 21/17

(54) **Farbfestlegungsvorrichtung**
Colour definition device
Dispositif de définition de la couleur

(30) Priorität: 01.06.2001 DE 10126887
(43) Veröffentlichungstag der Anmeldung: 04.12.2002
(73) Patentinhaber: Firma Ivoclar Vivadent AG, 9494 Schaan (LI)
(72) Erfinder: Kerschbaumer, Harald, 6833 Klaus (AT); Pokorny, Walter, 6712 Thüringen (AT); Rohner, Gottfried, 9450 Altstätten (CH)
(74) Vertreter: Baronetzky, Klaus

(56) Entgegenhaltungen:
- WO-A-00/69333
- WO-A-94/28447
- US-A- 5 038 258
- US-A- 5 541 419
- US-A- 5 910 841
- US-A- 5 914 786
- US-A- 5 990 468

## Beschreibung

Die Erfindung betrifft eine Farbfestlegungsvorrichtung gemäß dem Oberbegriff von Anspruch 1.

Eine derartige Farbfestlegungsvorrichtung ist seit längerem bekannt, beispielsweise aus der DE-OS 195 34 517. Über eine Lichtquelle mit 3 Strahlen wird bei dieser Lösung eine Zahnoberfläche beaufschlagt und über drei entsprechende Sensoren werden die je gemessenen Helligkeitswerte für die drei Grundfarben erfaßt. Die Auswertung soll hierbei eine möglichst geringe Farbabweichung zu den zur Verfügung stehenden Zahnfarben ergeben.

Ferner ist es seit längerem bekannt, daß Reflexionen das Erfassungs- und Auswertergebnis verfälschen. Durch die Anordnung von Lichtquellen in unterschiedlichen Winkeln mit bei unterschiedlichen Spektren läßt sich die Neigung zu Reflexionen etwas kompensieren.

Es ist seit langem bekannt, daß aufgrund der geringen Rauhtiefe der Zahnoberflächen Reflexionen das Ergebnis der Auswertung verfälschen. Um möglichst geringe Reflexionen zu erhalten, ist es bekannt, Titanoxidpuder als Kontrastpuder auf die Zahnoberfläche aufzubringen. Je nach Schichtstärke ist jedoch eine Verfälschung der Farbwerte nicht auszuschließen.

Um die Nachteile von Kontrastpuder zu vermeiden, ist es bereits vorgeschlagen worden (vgl. die DE-OS 40 34 007), eine Fluoreszenzfarbe zu verwenden, die Grün absorbiert und Gelb oder Rot emittiert. Ein deutlicher Nachteil einer derartigen Fluoreszenzfarbe liegt jedoch darin begründet, daß die Farbe verfälscht wird, so daß eine Kompensation erforderlich ist, wenn die Verschiebung erfaßt werden soll. Auch ist es schwierig, die Fluoreszenzfarbe exakt in gleichmäßiger Stärke aufzubringen, so daß sich diese Lösung nicht durchgesetzt hat.

Für die Beurteilung der Oberflächenstruktur ist es im Gegensatz zur Farbbeurteilung wünschenswert, Schatten zu erfassen, so daß die Struktur erkennbar ist. Auch hierbei stört die Aufbringung von Kontrastpuder oder fluoreszierende Farbe, denn derartige Abschattungen und dergleichen werden hierdurch reduziert oder aufgehoben.

Ferner ist es derzeit vorgeschlagen worden, ein drehbares Polarisationsfilter zu verwenden, das je nach Wahl des Anwenders die Reflexionen bei polarisiertem Licht zuläßt oder stufenlos vermindert. Diese Lösung erlaubt zwar den Vergleich einer Zahnoberfläche mit und ohne Reflexionen. Das Auswertergebnis hängt jedoch sehr stark davon ab, aus welchem Winkel die Lichtquelle die Zahnoberfläche beaufschlagt. Bei seitlicher Beaufschlagung ist häufig der von der Lichtquelle entfernten Bereich der Zahnoberfläche zu stark abgedunkelt und die dortige Struktur ist gebenenfalls nicht mehr erkennbar. In diesem Fall helfen auch elektronische Kompensationsmaßnahmen nicht.

Daher liegt der Erfindung die Aufgabe zugrunde, eine Farbfestlegungsvorrichtung gemäß dem Oberbegriff von Anspruch 1 zu schaffen, die sowohl die Farbe als auch die Struktur einer Zahnoberfläche verbessert zu erfassen vermag, bei zudem eine verminderte Abhängigkeit von der Ausrichtung der Lichtquelle auf die Zahnoberfläche bestehen soll.

Diese Aufgabe wird erfindungsgemäß durch Anspruch 1 gelöst. Vorteilhafte Weiterbildungen ergeben sich aus den Unteransprüchen.

Besonders günstig ist es, daß die erfindungsgemäße Farbfestlegungsvorrichtung mindestens 2 Lichtquellen aufweist, die die Zahnoberfläche zu unterschiedlichen Zeitpunkten aus unterschiedlichen Winkeln beaufschlagen. Hierdurch lassen sich zunächst Abschattungen, die bei der Aufnahme des Bildes der Zahnoberfläche bei Belichtung durch eine Lichtquelle entstehen, kompensieren, wobei sich erfindungsgemäß überraschend erwies, daß die Filterung des Lichts durch lediglich einen Polarisationsfilter die Beurteilung der Abschattierungen nicht erschwert, wenn die treffende Lichtquelle polarisationsfilterfrei die Zahnoberfläche bestrahlt.

Erfindungsgemäß ist es insofern besonders günstig, daß durch die Beaufschlagung der Zahnoberfläche mit einer Lichtquelle mit Polarisationsfilter ein reflexionsfreies Bild der Zahnoberfläche aufgenommen werden kann, während durch die Beaufschlagung mit der anderen Lichtquelle, die keinen Polarisationsfilter aufweist und die gegenüber der einen Lichtquelle in einem anderen Winkel angeordnet ist, die Erfassung von Strukturen gut möglich ist.

Bevorzugt sind die Lichtquellen als Weißlichtquellen ausgebildet und ein Referenzmuster, das mit den gleichen Lichtquellen und mit der gleichen Aufnahmevorrichtung aufgenommen oder wird wurde, wird elektronisch eingeblendet, beispielsweise knapp unterhalb des Zahns mit der aufgenommenen Zahnoberfläche.

Erfindungsgemäß ist es ferner besonders günstig, daß mit zwei Lichtquellen die Lichtbeaufschlagung der Zahnoberfläche von zwei unterschiedlichen Seiten erfolgen kann. Dadurch, daß die Lichtquellen abwechselnd eingeschaltet werden, lässt sich die Struktur des Zahns recht deutlich erkennen und bei dem herzustellenden Zahnmodell in entsprechender Weise nachmodellieren.

Erfindungsgemäß besonders günstig ist es ferner, daß durch die gemeinsame Aufnahme von Bildern, die durch unterschiedliche Lichtquellen hervorgerufen werden, zugleich auch eine Überprüfung der Lichtquellen und deren Farbspektren wirksam möglich ist. Hierzu wird eine sogenannte Weißkarte anstelle der Zahnoberfläche eingesetzt und die gemessenen Farbwerte jeder Lichtquelle werden für den Weißabgleich verwendet.

Gemäß einem weiteren besonders günstigen Gesichtspunkt ist im Strahlengang zwischen der Zahnoberfläche und der Aufnahmevorrichtung eine optische Linse vorgesehen. Mit einer derartigen optischen Linse ist es möglich, das Bild der Zahnoberfläche auf die Aufnahmevorrichtung zu fokussieren, um dort eine möglichst präzise Wiedergabe der tatsächlichen Zahnoberfläche aufnehmen zu können.

In einer weiteren, besonders bevorzugten Ausgestaltung der erfindungsgemäßen Lösung ist es vorgesehen, zusätzlich zu den Lichtquellen, die in verschiedenen Winkeln zu der Zahnoberfläche angeordnet sind und diese schräg bestrahlen, weitere Lichtquellen vorzusehen, die je auf der anderen Seite der Zahnoberfläche angebracht sind. Beispielsweise ist es möglich, eine Lichtquelle mit Polarisationsfilter im Winkel von etwa 45° zur Zahnoberfläche anzuordnen und die Zahnoberfläche aus diesem Winkel bestrahlen zu lassen. Eine weitere Lichtquelle ohne Polarisationsfilter kann im Winkel von 70° zur Zahnoberfläche angeordnet sein, so dass Abschattierungen besonders deutlich werden. Durch die Anordnung der Lichtquellen läßt sich die erwünschte Erfassung sowohl der Farbe ohne Reflexionen als auch der Struktur optimal bereitstellen.

Weitere Vorteile, Einzelheiten und Merkmale ergeben sich aus der nachfolgenden Beschreibung eines Ausführungsbeispiels anhand der Zeichnung.

Es zeigen:
- Fig. 1: eine schematische Ansicht einer erfindungsgemäßen Farbfestlegungsvorrichtung in einer Ausführungsform; und
- Fig. 2: eine Abbildung von Aufnahmen der Aufnahmevorrichtung, wobei links eine Aufnahme über die Lichtquelle ohne Polarisationsfilter und rechts eine Aufnahme über die Lichtquelle mit Polarisationsfilter dargestellt ist.

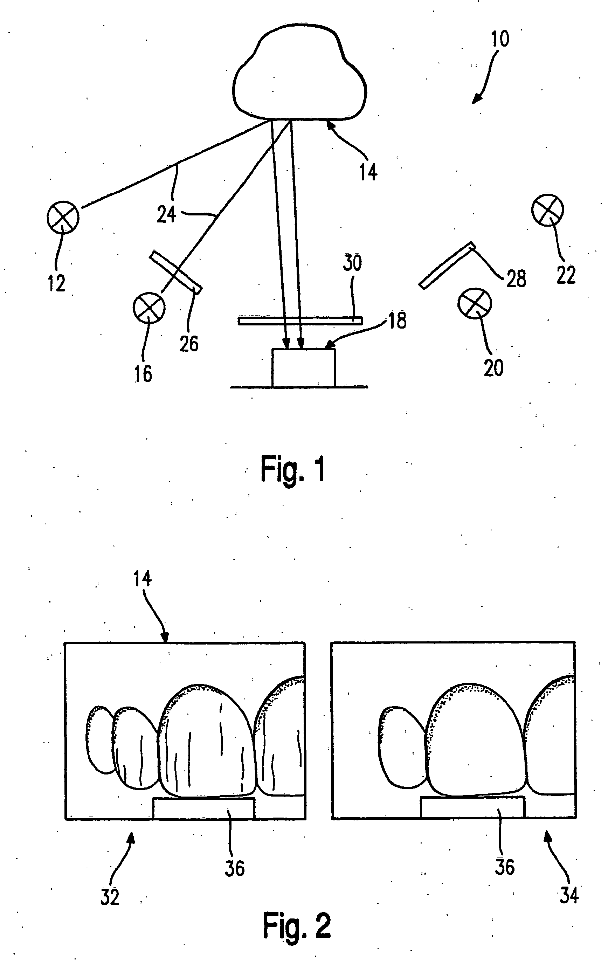

Die Farbfestlegungsvorrichtung 10 gemäß Fig. 1 weist eine Lichtquelle 12 auf, die recht weit seitlich vor einer Zahnoberfläche 14 angeordnet ist. Ferner ist eine Lichtquelle 16 vorgesehen, die auf der gleichen Seite wie die Lichtquelle 12 schräg vor der Zahnoberfläche 14 angeordnet ist.

Zentral und mittig vor der Zahnoberfläche 14 ist eine Aufnahmevorrichtung 18 angeordnet, die das von der Zahnoberfläche 14 reflektierte Licht erfassen soll.

Symmetrisch zu der Lichtquelle 16 ist schräg vor der Zahnoberfläche 14, jedoch auf der anderen Seite, eine Lichtquelle 20 angeordnet. Ferner ist bei der in Fig. 1 dargestellten Ausführungsform eine vierte Lichtquelle 22 recht weit seitlich vor der Zahnoberfläche 14 angeordnet. Die Lichtquelle 22 ist symmetrisch zu der Lichtquelle 12 angeordnet.

Jede Lichtquelle 12 bis 22 besteht aus einer Mehrzahl von LEDs, so daß eine entsprechend hohe Lichtleistung bereitgestellt wird.

Alle Lichtquellen 12 bis 22 sind als weiße Leuchtdioden ausgebildet. Sie emittieren Licht 24, wie es beispielsweise für die Lichtquellen 12 und 16 dargestellt ist, das auf die Zahnoberfläche 14 fällt und dort reflektiert wird und zur Aufnahmevorrichtung 18 gelangt.

Erfindungsgemäß ist nun die Lichtquelle 12 und die Lichtquelle 22 so ausgebildet, daß sie die Zahnoberfläche 14 direkt beaufschlagt, also ohne einen Filter. Demgegenüber ist vor der Lichtquelle 16 und auch vor der Lichtquelle 20 je ein Polarisationsfilter 26 und 28 vorgesehen, die von dem Licht 24 durchtreten werden, bevor es auf die Zahnoberfläche 14 gelangt. Beispielsweise sind die Polarisationsfilter 26 und 28 so angebracht; daß sie das Licht vertikal polarisieren.

Ferner ist im Strahlengang zwischen der Zahnoberfläche 14 und der Aufnahmevorrichtung 18 ein weiteres Polarisationsfilter 30 angebracht. Die Polarisationsrichtung des Polarisationsfilters 30 ist demgegenüber horizontal. Mit dieser Anordnung lassen sich in an sich bekannter Weise Reflexionen der Zahnoberfläche dann unterdrücken, wenn die Lichtquellen 16 und 20 eingeschaltet sind.

In Fig. 1 sind keine optischen Linsen dargestellt. Es versteht sich jedoch, daß die Lichtquellen 12 bis 22 bevorzugt von Reflektoren zur Erhöhung der Lichtausbeute umgeben sind, und vor den Lichtquellen je Sammellinsen vorgesehen sind. Bevorzugt sind diese Sammellinsen so ausgebildet, daß sie farbtreu und gleich keine Verfälschung des emittierten Farbspektrums erzeugen.

In entsprechender Weise ist zwischen der Zahnoberfläche 14 und der Aufnahmevorrichtung 18 eine Sammellinse vorgesehen, die das Bild der Zahnoberfläche 14 auf die Aufnahmevorrichtung 18 fokkusiert.

Die Aufnahmevorrichtung 18 weist einen CCD-Sensor oder einen beliebigen anderen geeigneten Sensor auf.

Aus Fig. 2 ist ersichtlich, in welcher Weise das Bild der Zahnoberfläche 14 erfasst werden kann.

Das in Fig. 2 links dargestellte Bild 32 wird erzeugt, indem die Lichtquelle 12 eingeschaltet wird. Die Reflexionen lassen die Struktur der Zahnoberfläche erkennen.

Demgegenüber wird das in Fig. 2 rechts dargestellte Bild 34 erzeugt, in dem die Lichtquelle 16 eingeschaltet wird. Durch die Polarisation des einfallenden Lichtes in einer zur Polarisationsrichtung des reflektierten Lichts senkrechten Richtung werden die Relexionen ausgeschaltet und eine Farbbestimmung ist leichter möglich.

Die Bilder 32 und 34 zeigen zusätzlich zu den Zahnoberflächen 14 je Referenzmuster 36, die unmittelbar benachbart und unterhalb der Zahnoberfläche eingeblendet sind. Bevorzugt sind entsprechende Referenzmusterkärtchen so angeordnet, daß sie unmittelbar benachbart den Zähnen aufgenommen werden können.

## Patentansprüche

1. Farbfestlegungsvorrichtung, mit mindestens einer Lichtquelle (16) und einer zweiten Lichtquelle (12) für die Beaufschlagung einer Zahnoberfläche (14) mit Licht, einer Aufnahmevorrichtung (18) für die Aufnahme des reflektierten Lichts, einem ersten Polaristationsfilter (30), das sich im Strahlengang zwischen der Zahnoberfläche (14) und der Aufnahmevorrichtung (18) befindet, einem zweiten Polarisatationsfilter (26), das sich im Strahlengang zwischen der ersten Lichtquelle (16) und der Zahnoberfläche (14) befindet, wobei sich kein Polarisatationsfilter zwischen der zweiten Lichtquelle (12) und der Zahnoberfläche (14) befindet, **dadurch gekennzeichnet, dass**
die beiden Lichtquellen (12, 16) zu unterschiedlichen Zeitpunkten einschaltbar sind und in unterschiedlichen Winkeln zur Zahnoberfläche (14) angeordnet sind, wobei der Winkel der zweiten Lichtquelle (12) zur Zahnoberfläche (14) so gewählt ist, dass Abschattungen, die bei der Aufnahme der Zahnoberfläche (14) bei Belichtung durch die Lichtquelle (12) entstehen, besonders deutlich werden.

2. Farbfestlegungsvorrichtung nach Anspruch 1, **dadurch gekennzeichnet, dass** zwei Polarisationsfilter (26, 30) im Strahlengang vorgesehen sind, deren Polarisationsrichtung ungleich ist.

3. Farbfestlegungsvorrichtung nach einem der vorhergehenden Ansprüche, **dadurch gekennzeichnet, dass** die Polarisationsrichtung der zwei Polarisationsfilter (26, 30) im Wesentlichen rechtwinklig zueinander ist.

4. Farbfestlegungsvorrichtung nach einem der vorhergehenden Ansprüche, **dadurch gekennzeichnet, dass** mindestens zwei, insbesondere vier Lichtquellen (12, 16, 20, 22) Licht aussenden, das aus unterschiedlichen Winkeln auf die Zahnoberfläche (14) trifft.

5. Farbfestlegungsvorrichtung nach einem der vorhergehenden Ansprüche, **dadurch gekennzeichnet, dass** als Lichtquellen (12, 16, 20, 22) LEDs, insbesondere weiße LEDs, eingesetzt sind.

6. Farbfestlegungsvorrichtung nach einem der vorhergehenden Ansprüche, **dadurch gekennzeichnet, dass** jede Lichtquelle (12, 16, 20, 22) eine Mehrzahl von LEDs aufweist.

7. Farbfestlegungsvorrichtung nach einem der vorhergehenden Ansprüche, **dadurch gekennzeichnet, dass** die Aufnahmevorrichtung eine CCD-Kamera aufweist und dass das aufgenommene Bild der Zahnoberfläche (14) anzeigbar und insbesondere abspeicherbar ist.

8. Farbfestlegungsvorrichtung nach einem der vorhergehenden Ansprüche, **dadurch gekennzeichnet, dass** von der Aufnahmevorrichtung (18) nacheinander Bilder der Zahnoberfläche (14) aufnehmbar sind, die beim Einschalten der ersten Lichtquelle (12, 22) und der zweiten Lichtquelle (16, 20) je erzeugbar sind.

9. Farbfestlegungsvorrichtung nach Anspruch 8, **dadurch gekennzeichnet, dass** die Bilder elektronisch kombinierbar sind.

10. Farbfestlegungsvorrichtung nach einem der vorhergehenden Ansprüche, **dadurch gekennzeichnet, dass** von der Aufnahmevorrichtung (18) ein Bild der Zahnoberfläche (14) aufnehmbar und einer Anzeigevorrichtung zuleitbar ist und dass in die Anzeigevorrichtung die Farbe oder das Bild eines Referenzmusters (36) in räumlicher Nähe zu dem Bild (32, 34) der Zahnoberfläche (14) eingeblendet ist.

11. Farbfestlegungsvorrichtung nach einem der vorhergehenden Ansprüche, **dadurch gekennzeichnet, dass** je zwei Lichtquellen (12, 16, 20, 22) entlang der optischen Achse der Aufnahmevorrichtung (18) symmetrisch zueinander angeordnet sind.

12. Farbfestlegungsvorrichtung nach einem der vorhergehenden Ansprüche, **dadurch gekennzeichnet, dass** die Lichtquellen (12, 16, 20, 22) von Reflektoren umgeben sind.

13. Farbfestlegungsvorrichtung nach einem der vorhergehenden Ansprüche, **dadurch gekennzeichnet, dass** vor den Lichtquellen (12, 16, 20, 22) je Sammellinsen angeordnet sind, die insbesondere farbtreu sind und keine Verfälschung des emittierten Farbspektrums erzeugen.

14. Farbfestlegungsvorrichtung nach einem der vorhergehenden Ansprüche, **dadurch gekennzeichnet, dass** zwischen der Zahnoberfläche (14) und der Aufnahmevorrichtung (18) eine Sammellinse angeordnet ist, die das Bild der Zahnoberfläche (14) auf die Aufnahmevorrichtung (18) fokussiert.

## Claims

1. A colour determining apparatus, with at least one light source (16) and a second light source (12) for applying light to a tooth surface (14), with a recording device (18) for recording the reflected light, with a first polarisation filter (30) which is situated in the beam path between the tooth surface (14) and the recording device (18), with a second polarisation filter (26) which is situated in the beam path between the first light source (16) and the tooth surface (14), no polarisation filter being disposed between the second light source (12) and the tooth surface (14), **characterised in that**
the two light sources (12,16) can be switched on at different times and are arranged at different angles to the tooth surface (14), wherein the angle of the second light source (12) to the tooth surface (14) is chosen so that shading, which occurs when exposing the tooth surface (14) under illumination by the light source (12), becomes especially clear.

2. A colour determining apparatus according to Claim 1, **characterised in that** two polarisation filters (26,30) are provided in the beam path, the polarisation direction of which is unequal.

3. A colour determining apparatus according to any one of the preceding Claims, **characterised in that** the polarisation direction of the two polarisation filters (26,30) is substantially perpendicular to one another.

4. A colour determining apparatus according to any one of the preceding Claims, **characterised in that** at least two, in particular four, light sources (12,16,20,22) emit light which is incident on the tooth surface (14) from different angles.

5. A colour determining apparatus according to any one of the preceding Claims, **characterised in that** LEDs, in particular white LEDs, are used as the light sources (12,16,20,22).

6. A colour determining apparatus according to any one of the preceding Claims, **characterised in that** each light source (12,16,20,22) has a plurality of LEDs.

7. A colour determining apparatus according to any one of the preceding Claims, **characterised in that** the recording device has a CCD camera, and **in that** the image taken of the tooth surface (14) can be displayed and, in particular, can be stored.

8. A colour determining apparatus according to any one of the preceding Claims, **characterised in that** successive images of the tooth surface (14) can be recorded by the recording device (18), each of which images can be generated upon switching on the first light source (12,22) and the second light source (16,20).

9. A colour determining apparatus according to Claim 8, **characterised in that** the images can be electronically combined.

10. A colour determining apparatus according to any one of the preceding Claims, **characterised in that** an image of the tooth surface (14) can be recorded by the recording device (18) and can be fed to a display device, and **in that** the colour or the image of a reference specimen (36) is faded in the display device in spatial vicinity to the image (32,34) of the tooth surface (14).

11. A colour determining apparatus according to any one of the preceding Claims, **characterised in that** each two light sources (12,16,20,22) are arranged symmetrically to one another along the optical axis of the recording device (18).

12. A colour determining apparatus according to any one of the preceding Claims, **characterised in that** the light sources (12,16,20,22) are surrounded by reflectors.

13. A colour determining apparatus according to any one of the preceding Claims, **characterised in that** respective converging lenses are arranged in front of the light sources (12,16,20,22) which lenses, in particular, are colour faithful and do not cause any distortion of the emitted light spectrum.

14. A colour determining apparatus according to any one of the preceding Claims, **characterised in that** between the tooth surface (14) and the recording device (18) a converging lens is arranged which focusses the image of the tooth surface (14) on to the recording device (18).

## Revendications

1. Dispositif de détermination de couleur, comprenant au moins une source de lumière (16) et une deuxième source de lumière (12) pour insoler une surface de dent (14) avec de la lumière, un dispositif de capture (18) pour capturer la lumière réfléchie, un premier filtre de polarisation (30), qui se trouve sur le trajet du faisceau entre la surface de dent (14) et le dispositif de capture (18), un deuxième filtre de polarisation (26), qui se trouve sur le trajet du faisceau entre la première source de lumière (16) et la surface de dent (14), dans lequel aucun filtre de polarisation ne se trouve entre la deuxième source de lumière (12) et la surface de dent (14), **caractérisé en ce que**
les deux sources de lumière (12, 16) peuvent être allumées à des moments différents et sont disposées à des angles différents par rapport à la surface de dent (14), l'angle de la deuxième source de lumière (12) par rapport à la surface de dent (14) étant choisi de manière à ce que des ombres, qui apparaissent lors de la capture de la surface de dent (14) sous l'effet de l'illumination par la source de lumière (12), deviennent particulièrement distinctes.

2. Dispositif de détermination de couleur selon la revendication 1, **caractérisé en ce que** deux filtres de polarisation (26, 30), dont les directions de polarisation sont différentes, sont prévus sur le trajet du faisceau.

3. Dispositif de détermination de couleur selon l'une quelconque des revendications précédentes,
**caractérisé en ce que** les directions de polarisation des deux filtres de polarisation (26, 30) sont essentiellement perpendiculaires l'une à l'autre.

4. Dispositif de détermination de couleur selon l'une quelconque des revendications précédentes, **caractérisé en ce qu'**au moins deux, en particulier quatre sources de lumière (12, 16, 20, 22) émettent de la lumière qui insole la surface de dent (14) selon différents angles.

5. Dispositif de détermination de couleur selon l'une quelconque des revendications précédentes, **caractérisé en ce que** des DEL, en particulier des DEL blanches, sont employées en tant que sources de lumière (12, 16, 20, 22).

6. Dispositif de détermination de couleur selon l'une quelconque des revendications précédentes, **caractérisé en ce que** chaque source de lumière (12, 16, 20, 22) présente une pluralité de DEL.

7. Dispositif de détermination de couleur selon l'une quelconque des revendications précédentes, **caractérisé en ce que** le dispositif de capture présente une caméra CCD et **en ce que** l'image prise de la surface de dent (14) peut être affichée et en particulier enregistrée.

8. Dispositif de détermination de couleur selon l'une quelconque des revendications précédentes, **caractérisé en ce que** des images de la surface de dent (14), qui peuvent chacune être obtenues lorsque la première source de lumière (12, 22) et la deuxième source de lumière (16, 20) sont allumées, peuvent être prises successivement par le dispositif de capture (18).

9. Dispositif de détermination de couleur selon la revendication 8, **caractérisé en ce que** les images peuvent être combinées par voie électronique.

10. Dispositif de détermination de couleur selon l'une quelconque des revendications précédentes, **caractérisé en ce qu'**une image de la surface de dent (14) peut être prise par le dispositif de capture (18) et transmise à un dispositif d'affichage, et **en ce que**, dans le dispositif d'affichage, la couleur ou l'image d'un échantillon de référence (36) est affichée à proximité spatiale de l'image (32, 34) de la surface de dent (14).

11. Dispositif de détermination de couleur selon l'une quelconque des revendications précédentes, **caractérisé en ce que** deux sources de lumière (12, 16, 20, 22) sont disposées symétriquement l'une à l'autre le long de l'axe optique du dispositif de capture (18).

12. Dispositif de détermination de couleur selon l'une quelconque des revendications précédentes, **caractérisé en ce que** les sources de lumière (12, 16, 20, 22) sont entourées de réflecteurs.

13. Dispositif de détermination de couleur selon l'une quelconque des revendications précédentes, **caractérisé en ce que** des lentilles convergentes, qui sont en particulier fidèles dans le rendu des couleurs et n'introduisent aucune erreur du spectre chromatique émis, sont disposées devant les sources de lumière (12, 16, 20, 22).

14. Dispositif de détermination de couleur selon l'une quelconque des revendications précédentes, **caractérisé en ce qu'**une lentille convergente, qui focalise l'image de la surface de dent (14) sur le dispositif de capture (18), est disposée entre la surface de dent (14) et le dispositif de capture (18).
